# EUROPÄISCHE PATENTSCHRIFT

(11) **EP 2 141 044 B1**
(45) Veröffentlichungstag und Bekanntmachung des Hinweises auf die Patenterteilung: **24.06.2020**
(21) Anmeldenummer: 09163728.0
(22) Anmeldetag: 25.06.2009
(51) Int. Cl.: B60L 58/10, B60L 1/00, B60L 9/00, B60L 3/12

(54) **Schienenfahrzeug und Verfahren zur Energieversorgung eines Schienenfahrzeugs**
Rail vehicle and method for supplying energy to a rail vehicle
Véhicule sur rail et procédé d'alimentation en énergie d'un véhicule sur rail

(30) Priorität: 30.06.2008 DE 102008031001
(43) Veröffentlichungstag der Anmeldung: 06.01.2010
(73) Patentinhaber: Siemens Mobility GmbH, 81739 München (DE)
(72) Erfinder: Leitel, Martin, 85221 Dachau (DE)

(56) Entgegenhaltungen:
- DE-A1- 10 218 258
- DE-A1- 19 704 153
- DE-A1- 19 921 146

## Beschreibung

Die Erfindung bezieht sich auf ein Schienenfahrzeug entsprechend Anspruch 1.

Aus dem Stand der Technik sind Schienenfahrzeuge bekannt, mit einem Verbrennungsmotor, welcher in Verbindung mit einem Generator elektrische Leistung zum Antrieb des Schienenfahrzeugs und zur Versorgung eines Hilfsbetriebe-Spannungsnetzes und eines Steuerspannungsnetzes zur Verfügung stellt, wobei an das Hilfsbetriebe-Spannungsnetz über ein Energiespeicher-Ladegerät ein Energiespeicher angeschlossen ist. Der Energiespeicher gewährleistet eine hilfsweise Energieversorgung des Steuerspannungsnetzes, beispielsweise wenn das Schienenfahrzeug bei abgeschalteter Hauptenergieversorgung sich im Stillstand befindet. Eine hilfsweise Energieversorgung der an das Hilfsbetriebe-Spannungsnetz angeschlossenen Hilfsbetriebe ist mittels eines Hilfsmotors gewährleistet.

Aufgabe der Erfindung ist es, ein Schienenfahrzeug der eingangs genannten Art bereitzustellen, welches die hilfsweise Energieversorgung wenigstens eines Steuerspannungsnetzes und wenigstens eines Hilfsbetriebe-Spannungsnetzes in besonders kostengünstiger Art und Weise ermöglicht.

Diese Aufgabe wird mittels eines Schienenfahrzeugs gemäß Anspruch 1 gelöst.

Die Erfindung löst diese Aufgabe ausgehend von dem eingangs genannten Schienenfahrzeug dadurch, dass die zweite Hilfs-Energieversorgung ebenfalls einen Energiespeicher aufweist und eine mit dem Energiespeicher verbundene Speiseeinrichtung aufweist, welche eine von dem Energiespeicher bereitgestellte Speicherklemmenspannung in eine andere Spannung umwandelt und an einem Anschluss bereitstellt, wobei der Anschluss mit zumindest einem Steuerspannungsnetz und/oder Hilfsbetriebe-Spannungsnetz verbunden ist.

Erfindungsgemäß wird somit hilfsweise wenigstens ein Hilfsbetriebe-Spannungsnetz über einen Energiespeicher mit elektrischer Energie versorgt. Durch das Zwischenspeichern der von der Hauptenergieversorgung erzeugten Energie kann der Hilfsmotor nach dem Stand der Technik entfallen und Kraftstoff eingespart werden. Um das Hilfsbetriebe-Spannungsnetz mittels des Energiespeichers mit elektrischer Energie zu versorgen, kann die von dem Energiespeicher bereitgestellte Speicherklemmenspannung mittels der Speiseeinrichtung in eine Hilfsbetriebe-Spannung umgewandelt und elektrische Energie über die Speiseeinrichtung in das Hilfsbetriebe-Spannungsnetz eingespeist werden. Gemäß einem anderen Ausführungsbeispiel kann der Energiespeicher aber auch eine Speicherklemmenspannung aufweisen, welche der Hilfsbetriebe-Spannung entspricht. In diesem Fall kann der Energiespeicher direkt mit dem Hilfsbetriebe-Spannungsnetz verbunden sein und die Speiseeinrichtung dient dem Einspeisen von Energie in zumindest ein weiteres Steuerspannungsnetz und/oder Hilfsbetriebe-Spannungsnetz, welches eine andere Betriebsspannung aufweist als die Speicherklemmenspannung. Bei der Verbindung zwischen der Speiseeinrichtung und dem zumindest einen Steuerspannungsnetz und/oder Hilfsbetriebe-Spannungsnetz muss es sich nicht um eine direkte Verbindung handeln. Beispielsweise können weitere Geräte und/oder Spannungsnetze zwischen dem Anschluss der Speiseeinrichtung und dem zumindest einen Steuerspannungsnetz und/oder Hilfsbetriebe-Spannungsnetz zwischengeschaltet sein.

Der Energiespeicher kann aus mehreren Teil-Energiespeichern aufgebaut sein. Diese Teil-Energiespeicher können unabhängig voneinander Energie speichern. Die Teil-Energiespeicher können auf einem identischen oder einem unterschiedlichen Speicherprinzip beruhen.

Die erste und die zweite Hilfs-Energieversorgung weisen einen gemeinsamen Energiespeicher auf.

Es ist somit vorgesehen, dass zumindest ein Steuerspannungsnetz und ein Hilfsbetriebe-Spannungsnetz einen gemeinsamen Energiespeicher aufweisen. Eine Ausgestaltung kann insbesondere vorsehen, dass die erste und die zweite Hilfsenergieversorgung identisch sind. Diese Ausgestaltung ermöglicht einerseits das Einsparen des Hilfsmotors nach dem Stand der Technik und bedarf lediglich einer Ergänzung des Hilfsbetriebe-Spannungsnetzes um die Speiseeinrichtung. Der ohnehin für das Steuerspannungsnetz vorgesehene Energiespeicher - ausreichende Dimensionierung vorausgesetzt - dient damit auch zur hilfsweisen Energieversorgung des Hilfsbetriebe-Spannungsnetzes. Dadurch können Kosten für Energiespeicher eingespart werden. Gemäß einem anderen Ausführungsbeispiel ist der ohnehin für das Steuerspannungsnetz vorgesehene Energiespeicher durch einen anderen Energiespeicher ersetzt, welcher eine der Hilfsbetriebe-Spannung entsprechende Speicherklemmenspannung aufweist. In diesem Fall dient die Speiseeinrichtung der Umwandlung der Speicherklemmenspannung in eine Spannung zur hilfsweisen Energieversorgung des Steuerspannungsnetzes. Auch in diesem Fall können Kosten für Energiespeicher eingespart werden.

Gemäß einer vorteilhaften Ausgestaltung der Erfindung ist ein Energiespeicher-Ladegerät vorgesehen, welches eine Versorgungsspannung in eine Speicherklemmenspannung umwandelt und an einem Anschluss bereitstellt.

Der Energiespeicher kann über ein Energiespeicher-Ladegerät aufladbar sein. Derartige Energiespeicher-Ladegeräte wandeln eine bereitgestellte Versorgungsspannung in eine zum Laden des Energiespeichers geeignete Speicherklemmenspannung um und stellen diese dem Energiespeicher zur Verfügung. Beispielsweise könnte das Energiespeicher-Ladegerät eingangsseitig mit dem Hilfsbetriebe-Spannungsnetz verbunden sein und ausgangsseitig mit dem Steuerspannungsnetz, wobei der Energiespeicher an das Steuerspannungsnetz angeschlossen ist und, solange die Hauptenergieversorgung das Hilfsbetriebe-Spannungsnetz mit elektrischer Energie versorgt, der Energiespeicher aufgeladen wird. Das Energiespeicher-Ladegerät könnte aber auch in anderer Weise angeordnet sein. Beispielsweise eingangsseitig direkt verbunden mit einem eine Versorgungsspannung bereitstellenden Anschluss der Hauptenergieversorgung und ausgangsseitig direkt mit dem Energiespeicher. Das Energiespeicher-Ladegerät kann aber auch derart ausgestaltet sein, dass es über mehrer Hilfsbetriebe-Spannungsniveaus hinweg unter Einbeziehung weiterer Hilfsbetriebe-Spannungsnetze über mehrere Geräte verteilt realisiert ist. Erfindungswesentlich hierbei ist lediglich, dass elektrische Energie der Hauptenergieversorgung über das Ladegerät dem Energiespeicher in Form einer geeigneten Speicherklemmenspannung zur Verfügung gestellt wird.

Die Erfindung sieht vor, dass die Speiseeinrichtung eine bidirektionale Speiseeinrichtung ist, welche in einem Betriebszustand eine Speicherklemmenspannung an einem zumindest mit dem Energiespeicher verbundenen Anschluss bereitstellt und in einem anderen Betriebszustand wenigstens eine von der Speicherklemmenspannung verschiedene Spannung an einem wenigstens mit einem Hilfsbetriebe-Spannungsnetz und/oder Steuerspannungsnetz verbundenen Anschluss bereitstellt.

Die bidirektionale Speiseeinrichtung kann mehr als die zwei genannten Anschlüsse aufweisen. Die beiden genannten Anschlüsse der bidirektionalen Speiseeinrichtung müssen nicht direkt mit dem Energiespeicher bzw. dem mindesten einen Hilfsbetriebe-Spannungsnetz und/oder Steuerspannungsnetz verbunden sein. Es kann sich auch um indirekte Verbindungen handeln.

Eine derartige bidirektionale Speiseeinrichtung fasst die Funktionen eines Energiespeicher-Ladegerätes und einer Speiseeinrichtung zusammen. Durch das Zusammenfassen der beiden Geräte können Bauteile eingespart und Anschaffungskosten weiter reduziert werden. Eine Hilfs-Energieversorgung des wenigstens einen Steuerspannungsnetzes und des wenigstens einen Hilfsbetriebe-Spannungsnetzes ist somit in besonders wirtschaftlicher Weise mit nur einem Energiespeicher und der bidirektionalen Speiseeinrichtung ermöglicht.

Zum Laden des Energiespeichers wandelt die bidirektionale Speiseeinrichtung eine bereitgestellte Versorgungsspannung in eine zum Laden des Energiespeichers geeignete Speicherklemmenspannung um.

Zur hilfsweisen Energieversorgung mindestens eines Hilfsbetriebe-Spannungsnetzes und/oder Steuerspannungsnetzes wandelt die bidirektionale Speiseeinrichtung die von dem Energiespeicher zur Verfügung gestellte Speicherklemmenspannung in eine zur Energieversorgung des mindestens einen Hilfsbetriebe-Spannungsnetzes und/oder des Steuerspannungsnetzes geeignete andere Spannung um. Dabei wird jeweils elektrische Energie übertragen. Derartige bidirektionale Speiseeinrichtungen, welche in der einen Richtung (hier mit Laderichtung bezeichnet) eine Versorgungsspannung in eine Speicherklemmenspannung und in der anderen Richtung (hier mit Rückspeiserichtung bezeichnet) die Speicherklemmenspannung zurück in mindestens eine andere Spannung umwandeln, sind aus dem allgemeinen Stand der Technik bekannt. Die Versorgungsspannung kann identisch mit der Hilfsbetriebe-Spannung sein. Normalerweise werden derartige bidirektionale Speiseeinrichtungen über Halbleiterschaltungen (Gleich-/Wechselrichter, Hoch-/Tiefsteller) realisiert, wobei die für die Lade- und Rückspeiserichtung benötigten Bauteile der Speiseeinrichtung entweder getrennt oder zumindest teilweise identisch ausgeführt werden können. Derartige bidirektionale Speiseeinrichtungen sind dem Fachmann bekannt und sollen deshalb hier nicht näher beschrieben werden. Bekannt ist es auch, Einrichtungen zur Potenzialtrennung der beiden über die Speiseeinrichtung verbundenen Spannungsnetze vorzusehen. Die Ausgestaltung derartiger Einrichtungen ist dem Fachmann ebenfalls bekannt. Die bidirektionale Speiseeinrichtung ist auf der einen Seite an mindestens einem Anschluss zumindest indirekt mit der Hauptenergieversorgung verbunden und an einem anderen Anschluss zumindest indirekt mit dem Energiespeicher verbunden. Ob die bidirektionale Speiseeinrichtung noch mit weiteren Komponenten verbunden ist, ist nicht erfindungswesentlich. Bei der Verbindung kann es sich um eine direkte oder indirekte Verbindung handeln. Die bidirektionale Speiseeinrichtung muss zudem nicht zwingend in einem Gerät realisiert sein, sondern kann auch über mehrere Geräte verteilt sein.

Weiter kann vorteilhaft vorgesehen sein, dass zumindest eine Hauptenergieversorgung mindestens einen Verbrennungsmotor und einen Generator aufweist.

In diesem Fall handelt es sich um ein dieselelektrisches Schienenfahrzeug. Der Generator kann beispielsweise über einen Hauptumrichter mit den Fahrmotoren und dem Hilfsbetriebe-Spannungsnetz verbunden sein.

Gemäß einer anderen Ausgestaltung der Erfindung weist mindestens eine Hauptenergieversorgung mindestens einen Umrichter auf, der mit einem elektrische Energie bereitstellenden Bahnversorgungsnetz verbindbar ist.

Das Schienenfahrzeug kann einen Stromabnehmer aufweisen, welcher die von dem Bahnversorgungsnetz bereitgestellte elektrische Spannung abnimmt und mit der Hauptenergieversorgung verbunden ist. Derartige Schienenfahrzeuge müssen keinen Kraftstoff mit sich mitführen.

Weiter kann vorteilhaft vorgesehen sein, dass das mindestens eine Steuerspannungsnetz eine Nenngleichspannung zwischen 12 V und 140 V aufweist.

Es handelt sich hierbei um übliche Betriebsspannungen für Steuerspannungsnetze, so dass Geräte aus Serienproduktion an das Steuerspannungsnetz angeschlossen werden können. Übliche Geräte des Steuerspannungsnetzes sind Einrichtungen des Gleitschutzes, Türen, Funk, Notlicht, Schütze und Schalter.

Weiter kann vorteilhaft vorgesehen sein, dass das Hilfsbetriebe-Spannungsnetz eine dreiphasige Nennwechselspannung zwischen 0 V und 500 V und eine Frequenz kleiner einschließlich 100 Hz aufweist.

Es handelt sich hierbei um übliche Betriebsspannungen für Hilfsbetriebe-Spannungsnetze. Übliche Geräte des Hilfsbetriebe-Spannungsnetzes sind Klimageräte und Belüftungseinrichtungen.

Es kann auch als vorteilhaft angesehen werden, dass der Energiespeicher mindestens einen chemischen Akkumulator aufweist.

Energiespeicher auf Akkumulatorbasis sind eine besonders bewährte Technologie. Grundsätzlich ist die Ausgestaltung des Energiespeichers aber nicht erfindungswesentlich. Im Rahmen der Erfindung kann der Energiespeicher somit auf einem beliebigen Speicherprinzip von Energie beruhen. Es kann beispielsweise vorgesehen sein, dass der Energiespeicher ein Schwungrad aufweist.

Gemäß einer anderen Ausgestaltung der Erfindung weist der Energiespeicher mindestens einen Speicher-Kondensator auf.

In einer weiteren Ausführungsform zur hilfsweisen Energieversorgung zumindest eines Hilfsbetriebe-Spannungsnetzes ebenfalls elektrische Energie in einem Energiespeicher gespeichert und im Bedarfsfall in das Hilfsbetriebe-Spannungsnetz eingespeist wird, wobei eine Speiseeinrichtung eine von dem Energiespeicher bereitgestellte Speicherklemmenspannung in wenigstens eine andere Spannung umwandelt und elektrische Energie zu wenigstens einem Hilfsbetriebe-Spannungsnetz und/oder Steuerspannungsnetz überträgt.

Die elektrische Energie zur hilfsweisen Energieversorgung des Hilfsbetriebe-Spannungsnetzes wird somit nicht mehr von einem Hilfsaggregat erzeugt, sondern wird bei noch laufender Hauptenergieversorgung in einem Energiespeicher zwischengespeichert, um dann bei abgestellter Hauptenergieversorgung oder zur Stützung derselben in das Hilfsbetriebe-Spannungsnetz eingespeist zu werden. Bei dem Energiespeicher kann es sich um einen weiteren Energiespeicher handeln. Insbesondere wird damit auf besonders kostengünstige Art und Weise erreicht, dass bei abgestellter Hauptenergieversorgung noch alle Funktionen der an das Hilfsbetriebe-Spannungsnetz angeschlossenen Hilfsbetriebe zur Verfügung stehen. Da keine Hilfsaggregate wie beispielsweise Hilfsmotoren mehr zum Einsatz kommen, ist das erfindungsgemäße Schienenfahrzeug im Stillstand - beispielsweise während eines Aufenthalts in einem Bahnhof - zudem besonders geräuscharm.

Gemäß einer vorteilhaften Ausgestaltung des erfindungsgemäßen Verfahrens wird zur hilfsweisen Energieversorgung zumindest eines Steuerspannungsnetzes und zumindest eines Hilfsbetriebe-Spannungsnetzes ein gemeinsamer Energiespeicher verwendet wird.

Dadurch können Anschaffungskosten für Energiespeicher eingespart werden.

Es kann auch als vorteilhaft angesehen werden, dass eine bidirektionale Speiseeinrichtung verwendet wird, welche in einem ersten Betriebszustand eine Versorgungsspannung in die Speicherklemmenspannung umwandelt und elektrische Energie zum Energiespeicher überträgt und in einem zweiten Betriebszustand die Speicherklemmenspannung in mindestens eine von der Speicherklemmenspannung verschiedene Spannung umwandelt und elektrische Energie zu mindestens einem Hilfsbetriebe-Spannungsnetz und/oder Steuerspannungsnetz überträgt.

Die bidirektionale Speiseinrichtung ersetzt somit das Energiespeicher-Ladegerät und die Speiseeinrichtung und fasst beide Funktionen in einer Einrichtung zusammen. Die Übertragung der elektrischen Energie in der einen Richtung zum Energiespeicher hin und in der andern Richtung zu mindestens einem Hilfsbetriebe-Spannungsnetz und/oder Steuerspannungsnetz kann über getrennte Wege/Bauteile der bidirektionalen Speiseeinrichtung erfolgen, so dass diese erfindungsgemäße Ausgestaltung vor allem Platz einspart. Es kann aber auch vorgesehen sein, für beide Übertragungswege zumindest teilweise identische Bauteile zu verwenden, so dass die bidirektionale Speiseeinrichtung gegenüber den getrennten Geräten kostengünstiger ist.

Vorteilhafter Weise wird das wenigstens eine Steuerspannungsnetz mit einer Nenngleichspannung zwischen 12 V und 140 V betrieben.

Weiter kann vorteilhaft vorgesehen sein, dass das mindesten eine Hilfsbetriebe-Spannungsnetz mit einer dreiphasigen Nennwechselspannung zwischen 0 V und 500 V und einer Frequenz kleiner einschließlich 100 Hz betrieben wird.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

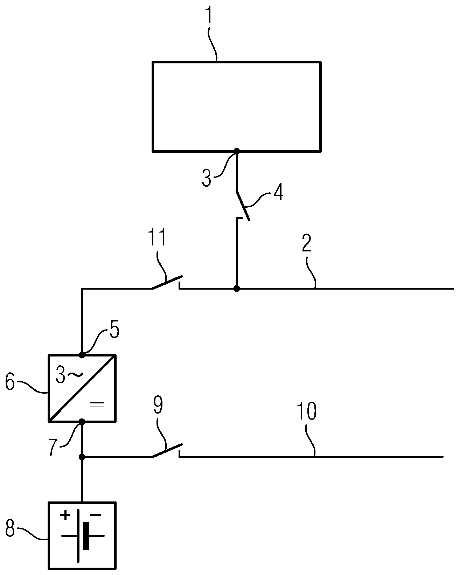

Dabei zeigt
- Figur 1: einzelne Komponenten der elektrischen Energieversorgung des erfindungsgemäßen Schienenfahrzeugs in schematischer Darstellung.

Die Figur 1 zeigt eine Hauptenergieversorgung 1, mit einem Anschluss 3, welcher über einen Schalter 4 sowohl mit einem Hilfsbetriebe-Spannungsnetz 2 als auch über einen weiteren Schalter 11 mit einem Anschluss 5 einer bidirektionalen Speiseeinrichtung 6 verbunden ist. Die bidirektionale Speiseeinrichtung 6 ist mit einem Anschluss 7 mit einem Energiespeicher 8 und über einen Schalter 9 mit einem Steuerspannungsnetz 10 verbunden. Wenn die Hauptenergieversorgung 1 elektrische Energie erzeugt, wird bei geschlossenem Schalter 4 das Hilfsbetriebe-Spannungsnetz 2 mit einer am Anschluss 3 bereitgestellten Hilfsbetriebe-Spannung versorgt. Die Hilfsbetriebe-Spannung ist in der Figur 1 als dreiphasige Wechselspannung dargestellt. Durch Schließen des Schalters 11 liegt diese Hilfsbetriebe-Spannung auch an dem Anschluss 5 der bidirektionalen Speiseeinrichtung 6 an, welche sich in einem Lade-Betriebszustand befindet und die Hilfsbetriebe-Spannung in eine Speicherklemmenspannung umwandelt und über den Anschluss 7 dem Energiespeicher zur Verfügung stellt, welcher aufgeladen wird. Durch Schließen des Schalters 9 wird zusätzlich das in dem dargestellten Ausführungsbeispiel mit Gleichspannung betriebene Steuerspannungsnetz 10 mit der am Anschluss 7 bereitgestellten Speicherklemmenspannung versorgt. Bei ausgeschalteter Hauptenergieversorgung 1 kann nun mittels des Energiespeichers 8 eine hilfsweise Energieversorgung der beiden Spannungsnetze 10, 2 erfolgen. Dazu ist Schalter 4 geöffnet und die Schalter 9 und 11 sind geschlossen. Die von dem Energiespeicher 8 bereitgestellte Speicherklemmenspannung wird über den Schalter 9 dem Steuerspannungsnetz 10 zur Verfügung gestellt. Ferner wird elektrische Energie vom Energiespeicher 8 über die bidirektionale Speiseeinrichtung 6 und den Schalter 11 in das Hilfsbetriebe-Spannungsnetz 2 eingespeist, indem die am Anschluss 7 anliegende Speicherklemmenspannung von der bidirektionalen Speiseeinrichtung 6 in die Hilfsbetriebe-Spannung umgewandelt und am Anschluss 5 bereitgestellt wird.

### Bezugszeichenliste

- 1: Hauptenergieversorgung
- 2: Hilfsbetriebe-Spannungsnetz
- 3: ein Anschluss der Hauptenergieversorgung
- 4: Schalter
- 5: ein Anschluss der bidirektionalen Speiseeinrichtung
- 6: bidirektionale Speiseeinrichtung
- 7: ein Anschluss der bidirektionalen Speiseeinrichtung
- 8: Energiespeicher
- 9: Schalter
- 10: Steuerspannungsnetz
- 11: Schalter

## Patentansprüche

1. Schienenfahrzeug mit
- wenigstens einer Hauptenergieversorgung (1),
- einem mit der Hauptenergieversorgung (1) verbundenen Fahrmotor,
- wenigstens einem Steuerspannungsnetz (10),
- wenigstens einem Hilfsbetriebe-Spannungsnetz (2),
- einer ersten Hilfs-Energieversorgung aufweisend einen mit dem Steuerspannungsnetz (10) verbundenen Energiespeicher (8),
- und wenigstens einer zweiten Hilfs-Energieversorgung für wenigstens eines der Hilfsbetriebe-Spannungsnetze (2),
- wobei die Hauptenergieversorgung (1) elektrische Leistung den Fahrmotoren bereitstellt, wobei die zweite Hilfs-Energieversorgung einen weiteren Energiespeicher (8) aufweist und eine mit dem Energiespeicher verbundene Speiseeinrichtung (6) aufweist,
- wobei die Speiseeinrichtung (6) einen ersten Anschluss (5) und einen zweiten Anschluss (7) aufweist,
- wobei die beiden Energiespeicher (8) Teilenergiespeicher eines gemeinsamen Energiespeichers (8) der ersten und der zweiten Hilfs-Energieversorgung sind,
**gekennzeichnet durch**,
- einen ersten Schalter (4), einen zweiten Schalter (11) und einen dritten Schalter (9),
- wobei bei geschlossenem erster Schalter (4) ein dritter Anschluss (3) der Hauptenergieversorgung (1) mittels des ersten Schalters (4) mit dem Hilfsbetriebe-Spannungsnetz (2) und dem zweiten Schalter (11) elektrisch verbunden ist,
- wobei zwischen dem ersten Anschluss (5) und dem Hilfsbetriebe-Spannungsnetz (2) der zweite Schalter (11) angeordnet ist,
- wobei der erste Anschluss (5) mittels des geschlossenen zweiten Schalters (11) elektrisch mit dem Hilfsbetriebe-Spannungsnetz (2) verbunden ist,
- wobei zwischen dem zweiten Anschluss (7) und dem Steuerspannungsnetz (10) der dritte Schalter (9) angeordnet ist,
- wobei der zweite Anschluss (7) mittels des geschlossenen dritten Schalters (9) elektrisch mit dem Steuerspannungsnetz (10) verbunden ist,
- wobei die Speiseeinrichtung (6) eine bidirektionale Speiseeinrichtung ist,
- wobei in einem ersten Betriebszustand, wenn die Hauptenergieversorgung (1) elektrische Energie erzeugt, bei geschlossenem ersten Schalter (4) das Hilfsbetriebe-Spannungsnetz (2) mit einer am dritten Anschluss (3) bereitgestellten Hilfsbetriebe-Spannung versorgt wird,
- wobei im ersten Betriebszustand der zweite Schalter (11) geschlossen ist und die Hilfsbetriebe-Spannung an dem ersten Anschluss (5) der bidirektionalen Speiseeinrichtung (6) anliegt,
- wobei die bidirektionale Speiseeinrichtung (6) im ersten Betriebszustand in einem Lade-Betriebszustand eine Speicherklemmenspannung an dem mit dem Energiespeicher (8) verbundenen zweiten Anschluss (7) bereitstellt und den Energiespeicher (8) lädt,
- wobei im ersten Betriebszustand der dritte Schalter (9) geschlossen ist und das Steuerspannungsnetz (10) mit der am zweiten Anschluss (7) bereitgestellten Speicherklemmenspannung versorgt wird,
- wobei in einem zweiten Betriebszustand die Hauptenergieversorgung (1) ausgeschaltet ist und der erste Schalter (4) geöffnet und der zweite Schalter (11) und der dritte Schalter (9) geschlossen sind,
- wobei im zweiten Betriebszustand die von dem Energiespeicher (8) bereitgestellte Speicherklemmenspannung über den dritten Schalter (9) dem Steuerspannungsnetz (10) zur Verfügung gestellt ist,
- wobei im zweiten Betriebszustand elektrische Energie vom Energiespeicher (8) über die bidirektionale Speiseeinrichtung (6) und den zweiten Schalter (11) in das Hilfsbetriebe-Spannungsnetz (2) derart eingespeist wird, dass die am zweiten Anschluss (7) anliegende Speicherklemmenspannung von der bidirektionalen Speiseeinrichtung (6) in die Hilfsbetriebe-Spannung umgewandelt und am ersten Anschluss (5) bereitgestellt wird.

2. Schienenfahrzeug nach Anspruch 1,
**dadurch gekennzeichnet, dass** zumindest eine Hauptenergieversorgung mindestens einen Verbrennungsmotor und einen Generator aufweist.

3. Schienenfahrzeug nach einem der vorstehenden Ansprüche,
**dadurch gekennzeichnet, dass** mindestens eine Hauptenergieversorgung mindestens einen Umrichter aufweist, der mit einem elektrische Energie bereitstellenden Bahnversorgungsnetz verbindbar ist.

4. Schienenfahrzeug nach einem der vorstehenden Ansprüche,
**dadurch gekennzeichnet, dass** das wenigstens eine Steuerspannungsnetz eine Nenngleichspannung zwischen 12 V und 140 V aufweist.

5. Schienenfahrzeug nach einem der vorstehenden Ansprüche,
**dadurch gekennzeichnet, dass** das wenigstens eine Hilfsbetriebe-Spannungsnetz eine dreiphasige Nennwechselspannung zwischen 0 V und 500 V und eine Frequenz kleiner einschließlich 100 Hz aufweist.

6. Schienenfahrzeug nach einem der vorstehenden Ansprüche,
**dadurch gekennzeichnet, dass** der Energiespeicher mindestens einen chemischen Akkumulator aufweist.

7. Schienenfahrzeug nach einem der Ansprüche 1 bis 4,
**dadurch gekennzeichnet, dass** der Energiespeicher mindestens einen Speicher-Kondensator aufweist.

## Claims

1. Rail vehicle having
- at least one main energy supply (1),
- a drive motor connected to the main energy supply (1),
- at least one control voltage network (10),
- at least one auxiliary operation voltage network (2),
- a first auxiliary energy supply having an energy store (8) connected to the control voltage network (10),
- and at least one second auxiliary energy supply for at least one of the auxiliary operation voltage networks (2),
- wherein the main energy supply (1) provides electric power to the drive motors,
- wherein the second auxiliary energy supply has a further energy store (8) and has a feed device (6) connected to the energy store,
- wherein the feed device (6) has a first terminal (5) and a second terminal (7),
- wherein the two energy stores (8) are energy sub-stores of a common energy store (8) of the first and the second auxiliary energy supply,
**characterized by**
- a first switch (4), a second switch (11) and a third switch (9),
- wherein, when the first switch (4) is closed, a third terminal (3) of the main energy supply (1) is electrically connected to the auxiliary operation voltage network (2) and the second switch (11) by way of the first switch (4),
- wherein the second switch (11) is arranged between the first terminal (5) and the auxiliary operation voltage network (2),
- wherein the first terminal (5) is electrically connected to the auxiliary operation voltage network (2) by way of the closed second switch (11),
- wherein the third switch (9) is arranged between the second terminal (7) and the control voltage network (10),
- wherein the second terminal (7) is electrically connected to the control voltage network (10) by way of the closed third switch (9),
- wherein the feed device (6) is a bidirectional feed device,
- wherein, in a first operating state, when the main energy supply (1) generates electrical energy, when the first switch (4) is closed, the auxiliary operation voltage network (2) is supplied with an auxiliary operation voltage provided at the third terminal (3),
- wherein, in the first operating state, the second switch (11) is closed and the auxiliary operation voltage is present at the first terminal (5) of the bidirectional feed device (6),
- wherein, in the first operating state, the bidirectional feed device (6) provides a storage terminal voltage at the second terminal (7) connected to the energy store (8) in a charging operating state and charges the energy store (8),
- wherein, in the first operating state, the third switch (9) is closed and the control voltage network (10) is supplied with the storage terminal voltage provided at the second terminal (7),
- wherein, in a second operating state, the main energy supply (1) is switched off and the first switch (4) is open and the second switch (11) and the third switch (9) are closed,
- wherein, in the second operating state, the storage terminal voltage provided by the energy store (8) is made available to the control voltage network (10) via the third switch (9),
- wherein, in the second operating state, electrical energy is fed from the energy store (8) into the auxiliary operation voltage network (2) via the bidirectional feed device (6) and the second switch (11) such that the storage terminal voltage present at the second terminal (7) is converted into the auxiliary operation voltage by the bidirectional feed device (6) and is provided at the first terminal (5).

2. Rail vehicle according to Claim 1,
**characterized in that**
at least one main energy supply has at least one combustion engine and a generator.

3. Rail vehicle according to one of the preceding claims,
**characterized in that**
at least one main energy supply has at least one converter that is able to be connected to a rail supply network providing electrical energy.

4. Rail vehicle according to one of the preceding claims,
**characterized in that**
the at least one control voltage network has a nominal voltage of between 12 V and 140 V.

5. Rail vehicle according to one of the preceding claims,
**characterized in that**
the at least one auxiliary operation voltage network has a three-phase nominal voltage of between 0 V and 500 V and a frequency of less than and including 100 Hz.

6. Rail vehicle according to one of the preceding claims,
**characterized in that**
the energy store has at least one chemical accumulator battery.

7. Rail vehicle according to one of Claims 1 to 4,
**characterized in that**
the energy store has at least one storage capacitor.

## Revendications

1. Véhicule sur rail comprenant
- au moins une alimentation principale en énergie (1),
- un moteur de traction connecté à l'alimentation principale en énergie (1),
- au moins un réseau de tension de commande (10),
- au moins un réseau d'alimentation auxiliaire (2),
- une première alimentation auxiliaire en énergie comportant un accumulateur d'énergie (8) connecté au réseau de tension de commande (10),
- et au moins une seconde alimentation auxiliaire en énergie pour au moins l'un des réseaux d'alimentation auxiliaire (2),
- dans lequel l'alimentation principale en énergie (1) fournit de l'énergie électrique aux moteurs de traction,
- dans lequel la seconde alimentation auxiliaire en énergie comporte un autre accumulateur d'énergie (8) et un dispositif d'alimentation (6) connecté à l'accumulateur d'énergie,
- dans lequel le dispositif d'alimentation (6) comporte un premier raccordement (5) et un deuxième raccordement (7),
- dans lequel les deux accumulateurs d'énergie (8) sont des accumulateurs d'énergie partiels d'un accumulateur d'énergie commun (8) de la première et de la seconde alimentations auxiliaires en énergie, **caractérisé par**
- un premier interrupteur (4), un deuxième interrupteur (11) et un troisième interrupteur (9),
- dans lequel lorsque le premier interrupteur (4) est fermé, un troisième raccordement (3) de l'alimentation principale en énergie (1) est connecté électriquement au réseau d'alimentation auxiliaire (2) et au deuxième interrupteur (11) au moyen du premier interrupteur (4),
- dans lequel le deuxième interrupteur (11) est disposé entre le premier raccordement (5) et le réseau d'alimentation auxiliaire (2),
- dans lequel le premier raccordement (5) est connecté électriquement au réseau d'alimentation auxiliaire (2) au moyen du deuxième interrupteur fermé (11),
- dans lequel le troisième interrupteur (9) est disposé entre le deuxième raccordement (7) et le réseau de tension de commande (10),
- dans lequel le deuxième raccordement (7) est connecté électriquement au réseau de tension de commande (10) au moyen du troisième interrupteur fermé (9),
- dans lequel le dispositif d'alimentation (6) est un dispositif d'alimentation bidirectionnel,
- dans lequel, dans un premier état de fonctionnement, lorsque l'alimentation principale en énergie (1) génère de l'énergie électrique, lorsque le premier interrupteur (4) est fermé, le réseau d'alimentation auxiliaire (2) est alimenté par une tension d'alimentation auxiliaire fournie au niveau du troisième raccordement (3),
- dans lequel, dans le premier état de fonctionnement, le deuxième interrupteur (11) est fermé et la tension d'alimentation auxiliaire est présente au niveau du premier raccordement (5) du dispositif d'alimentation bidirectionnel (6),
- dans lequel le dispositif d'alimentation bidirectionnel (6) fournit dans le premier état de fonctionnement dans un état de fonctionnement de charge une tension de borne de stockage au deuxième raccordement (7) connecté à l'accumulateur d'énergie (8) et charge l'accumulateur d'énergie (8),
- dans lequel le troisième interrupteur (9) est fermé dans le premier état de fonctionnement et le réseau de tension de commande (10) est alimenté par la tension de borne de stockage fournie au niveau du deuxième raccordement (7),
- dans lequel l'alimentation principale en énergie (1) est coupée dans un deuxième état de fonctionnement, et le premier interrupteur (4) est ouvert et le deuxième interrupteur (11) et le troisième interrupteur (9) sont fermés,
- dans lequel, dans le deuxième état de fonctionnement, la tension de borne de stockage fournie par l'accumulateur d'énergie (8) est mise à disposition du réseau de tension de commande (10) par l'intermédiaire du troisième interrupteur (9),
- dans lequel, dans le deuxième état de fonctionnement, l'énergie électrique est fournie au réseau d'alimentation auxiliaire (2) depuis l'accumulateur d'énergie (8) par l'intermédiaire du dispositif d'alimentation bidirectionnel (6) et du deuxième interrupteur (11) de sorte que la tension de borne de stockage présente au deuxième raccordement (7) est convertie par le dispositif d'alimentation bidirectionnel (6) en tension d'alimentation auxiliaire et est mise à disposition au niveau du premier raccordement (5).

2. Véhicule sur rail selon la revendication 1,
**caractérisé en ce qu'**au moins une alimentation principale en énergie comporte au moins un moteur à combustion et un générateur.

3. Véhicule sur rail selon l'une quelconque des revendications précédentes, **caractérisé en ce qu'**au moins une alimentation principale en énergie comporte au moins un convertisseur qui peut être connecté à un réseau d'alimentation ferroviaire fournissant de l'énergie électrique.

4. Véhicule sur rail selon l'une quelconque des revendications précédentes, **caractérisé en ce que** l'au moins un réseau de tension de commande a une tension continue nominale comprise entre 12 V et 140 V.

5. Véhicule sur rail selon l'une quelconque des revendications précédentes, **caractérisé en ce que** l'au moins un réseau d'alimentation auxiliaire a une tension alternative nominale triphasée comprise entre 0 V et 500 V et une fréquence inférieure ou égale à 100 Hz.

6. Véhicule sur rail selon l'une quelconque des revendications précédentes, **caractérisé en ce que** l'accumulateur d'énergie comporte au moins un accumulateur chimique.

7. Véhicule sur rail selon l'une quelconque des revendications 1 à 4, **caractérisé en ce que** l'accumulateur d'énergie comporte au moins un condensateur de stockage.
